# EUROPEAN PATENT SPECIFICATION

(11) **EP 1 881 758 B1**
(45) Date of publication and mention of the grant of the patent: **13.08.2014**
(21) Application number: 06763194.5
(22) Date of filing: 19.05.2006
(51) Int. Cl.: A01N 25/02, C05G 3/00, C10G 2/00, C10G 45/58

(54) **COMPOSITION COMPRISING A FISCHER-TROPSCH DERIVED WHITE OIL AND FERTILIZER**
ZUSAMMENSETZUNG AUS EINES FISCHER-TROPSCH STAMMENDEN WEISSÖLS UND EINES DÜNGELMITTEL
COMPOSITION D'HUILE BLANCHE OBTENUE PAR LE PROCEDE FISCHER-TROPSCH ET D'ENGRAIS

(30) Priority: 20.05.2005 EP 05011022
(43) Date of publication of application: 30.01.2008
(73) Proprietor: Shell Internationale Research Maatschappij B.V., 2596 HR Den Haag (NL)
(72) Inventor: NULL, Volker, Klaus, 21107 Hamburg (DE)
(74) Representative: Matthezing, Robert Maarten
(86) International application number: PCT/EP2006/062456
(87) International publication number: WO 2006/122980

(56) References cited:
- EP-A- 1 382 639
- WO-A-96/00199
- WO-A-02/063941
- WO-A-02/070627
- WO-A-02/096842
- WO-A-2004/009699
- WO-A-2004/033607
- US-B1- 6 355 083

## Description

The present invention is directed to a composition comprising a white oil as a carrier oil for fertilizers as active ingredients.

Carrier oils usually serve as diluents and coating agents for pesticides, fertilizer formulations or food grade additives. This is particularly relevant where the active component is a solid in e.g. powdery form. The addition of a carrier oil results in an applicable form, while also protecting material from humidity and/or oxidation. Conventional liquid carriers are for instance described in Watkins, "Handbook of Insecticide Dust Diluents and Carriers", 2nd Ed., Darland Books, Caldwell N.J.; J. Wiley & Sons, N. Y.; Marsden, "Solvents Guide", 2nd Ed., Interscience, N.Y. 1950; McCutcheon's.

The carrier is for instance the material to which the formulated pesticide is added for field application. In this field application, the primary purpose of the carrier is to enable uniform distribution of a small amount of formulated pesticide to a large area. Known liquid carriers for spray applications include water where the material to be sprayed is water soluble and sufficiently stable, vegetable oils, and mineral gas oils. A problem with mineral gas oils is that they usually cause toxicity issues for marine life forms due to the presence of aromatic and naphthenic components. Although this may be overcome by employing gas oils of lower toxicity, a further problem resides in the fact that mixtures or solutions generally have a low flame point which requires particular attention, and the use of special application equipment to prevent fires due to e.g. discharges of static electricity.

Solid fertilizer particles on the other hand usually require coatings in order to reduce coagulation due to the mostly hygroscopic nature of such compounds or compositions, as for instance described for urea fertilizers as disclosed in GB-A-1385697. This publication describes a process for reducing the absorption of moisture of urea granules by treating the granules with a coating agent comprising a mineral oil in admixture with a solid paraffin, a synthetic paraffin having a molecular weight of from 500 to 5000 and a melting point between 85°C and 115°C, and animal or vegetable fat or oil. A disadvantage of this carrier oil is the presence of the mineral oil, which reduces the biological acceptability of the coating agent, in particular for marine life forms.

Document WO 02/063941 discloses a water/oil emulsion used to fix fertilizer to seeds, wherein the oil can be a biodegradable white oil

It is an object of the present invention to avoid or at least minimize the above problems. It is a further object of the present invention to provide an alternative carrier oil for fertilisers, insecticides, herbicides or other active components. It is a further object of the present application to provide an alternative carrier oil in food applications.

One or more of the above or other objects are achieved according to the present invention by providing a Composition comprising a Fischer-Tropsch derived white oil, wherein the Fischer-Tropsch derived white oil has a kinematic viscosity at 100 °C of from more than 2 mm²/s and less than 7 mm²/s, as determined according to ISO 3014, and a fertilizer as an active component

Surprisingly, the compositions according to the present invention show an improved biological acceptance, as expressed by the ready biodegradability of the compositions, while at the same time the white oils as used in the compositions according to the present invention have a content of mineral hydrocarbons with carbon numbers less than 25 of below 5% (w/w) as required by e.g. EU Directive 90/128/EEC for use in food applications.

Further, the use of Fischer-Tropsch derived white oils is advantageous because they are more easily obtainable than medicinal white oils derived from mineral oils. A further advantage is that the contents of sulphur and nitrogen are nearly zero, due to the nature of the Fischer-Tropsch process.

An additional advantage is that the pour point of the Fischer-Tropsch derived oils is typically lower than the pour point of mineral oil derived white oils of comparable viscosity. This is advantageous because handling of the carrier oil, coating and also blending operations, in particular at low temperature conditions will become less cumbersome.

The composition according to the present invention comprises, other than the Fischer-Tropsch derived white oil, one or more fertilizers.

The person skilled in the art will readily understand what is meant by "white oil", or more specifically "medicinal white oil". The white oil may be any type of Fischer-Tropsch derived white oil having a kinematic viscosity at 100 °C of between more than 2 and less than 7 mm²/s. It preferably fulfils the requirements for medicinal white oils. General examples of white oils are for instance described in the above referenced EP-A-1 382 639 and in General Textbook "Lubricant Base Oil and Wax Processing", Avilino Sequeira, Jr, Marcel Dekker Inc., New York, 1994, Chapter 6, pages 141-145.

The Fischer-Tropsch derived white oil has a kinematic viscosity at 100°C, of more than above 2.0 mm²/s, preferably above 2.25 mm²/s, more preferably above 2.4 mm²/s, and even more preferably above 2.5 mm²/s, as determined according to ISO 3014.

The Fischer-Tropsch derived white oil preferably has a content of mineral hydrocarbons with carbon numbers less than 25 of not more than 5% (w/w), preferably below 3% (w/w), more preferably below 1% (w/w). Further, the Fischer-Tropsch derived white oil preferably has 5 wt% recovery boiling point of above 391 °C according to ASTMD 2887. The Fischer-Tropsch derived oil preferably has a Saybolt colour of greater than +25 and preferably equal to +30. The content of polar compounds is preferably less than 1 wt% and the content of non-cyclic isoparaffins is preferably between 75 and 98 wt%. The ultra violet (UV) adsorption spectra values as measured according to ASTM D 2269 is preferably less than 0.70 in the 280-289 nm spectral band, less than 0.60 in the 290-299 nm spectral band, less than 0.40 in the 300-329 nm spectral band and less than 0.09 in the 330-380 nm spectral band as according to FDA 178.3620 (c). The pour point of the oil is preferably below -10 °C and more preferably below -15 °C. The CN number as measured according to IEC 590 is preferably between 15 and 30.

The white oil may be any type of Fischer-Tropsch derived white oil having a kinematic viscosity at 100 °C of more than 2 mm²/s, and less than 7 mm²/s due to the increased biodegradablity. It preferably also fulfils the requirements for medicinal white oils. Yet more preferably, the Fischer-Tropsch derived white oil has a kinematic viscosity at 100 °C of less than 6.5 mm²/s, again more preferably less than 6.0 mm²/s, more preferably less than 5.5 mm²/s, even more preferably less than 5.0 mm²/s, and yet more preferably of less than 4.5 mm²/s, as determined according to ISO 3014. The Fischer-Tropsch derived white oil has a kinematic viscosity at 100 °C of above 2.0 mm²/s, preferably above 2.25 mm²/s, more preferably above 2.4 mm²/s, even more preferably above 2.5 mm²/s, yet more preferably above 3 mm²/s as determined according to ISO 3014. It has been found that if a white oil with a viscosity of 2 mm²/s or below is employed, it might be absorbed into solid particles, thereby reducing the efficiency, while the flame points of such white oils generally are becoming lower and hence more care needs to taken with respect to application.

The content of Fischer-Tropsch white oil as carrier oil in the composition may range from 0.1 wt% to 80 wt%, more suitably from 0.5 to 50 wt%, yet more suitably from 1 to 25 wt%, and most suitably from 2 to 20 wt%. The exact amount of the Fischer-Tropsch derived carrier oil depends on the desired properties of the composition, as well as on the viscosity of the Fischer-Tropsch derived white oil.

Further it is preferred according to the present invention that the Fischer-Tropsch white oil has a kinematic viscosity at 40 °C of less than 55 mm²/s, preferably less than 45 mm²/s, more preferably less than 40 mm²/s, even more preferably less than 35 mm²/s, most preferably less than 30 mm²/s according to ISO 3014.

Further, the Fischer-Tropsch white oil preferably has a flash point below 270 °C, preferably below 260 °C, more preferably below 250 °C, and above 220 °C, preferably above 225 °C, more preferably above 230 °C according to ISO 2592.

The Fischer-Tropsch derived white oil according to the present invention is preferably obtained by the following process. The preferred process comprises (1) a Fischer-Tropsch synthesis step, (2) a hydrocracking/ hydroisomerisation step on (part of) the Fischer-Tropsch synthesis product followed by (3) a pour point reducing step of (a fraction of) the product of the hydroprocessing step. Either solvent or catalytic dewaxing may achieve reduction of pour point in step (3). The desired medicinal or technical white oil having the desired viscosity can be isolated from said dewaxed product by means of distillation. Optionally the oil is hydrofinished or subjected to an adsorption treatment in order to improve its colour. Examples of these process steps are illustrated for the below preferred embodiment. The thus obtained Fischer-Tropsch derived white oil is then blended in an additional step (e) with the polystyrene or styrene-copolymer polymer.

The Fischer-Tropsch synthesis step may be performed according to the so-called commercial Sasol process, the commercial Shell Middle Distillate Process or by the non-commercial Exxon process. These and other processes are for example described in more detail in EP-A-776 959, EP-A-668 342, US-A-4 943 672, US-A-5 059 299, WO-A-9 934 917 and WO-A-99/20720. Most of these publications also describe the above-mentioned hydroisomerisation/ hydrocracking step (2).

A preferred process in which high yields of medicinal or technical white oils having a vK@100 of less than 7 mm²/s, can be obtained is by:
(a) hydrocracking/hydroisomerisating a Fischer-Tropsch derived feed, wherein weight ratio of compounds having at least 60 or more carbon atoms and compounds having at least 30 carbon atoms in the Fischer-Tropsch derived feed is at least 0.2 and wherein at least 30 wt% of compounds in the Fischer-Tropsch derived feed have at least 30 carbon atoms;
(b) separating the product of step (a) into one or more lower boiling distillate fraction(s) and a higher boiling white oil precursor fraction;
(c) performing a pour point reducing step to white oil precursor fraction obtained in step (b); and
(d) isolating the white oil by distilling the product of step (c).

Accordingly, the compositions according to the present invention may be obtained by a process comprising preparing a Fischer-Tropsch derived white oil by:
(a) hydrocracking/hydroisomerisating a Fischer-Tropsch derived feed, wherein weight ratio of compounds having at least 60 or more carbon atoms and compounds having at least 30 carbon atoms in the Fischer-Tropsch derived feed is at least 0.2 and wherein at least 30 wt% of compounds in the Fischer-Tropsch derived feed have at least 30 carbon atoms;
(b) separating the product of step (a) into one or more lower boiling distillate fraction(s) and a higher boiling white oil precursor fraction;
(c) performing a pour point reducing step to the white oil precursor fraction obtained in step (b); and
(d) isolating the white oil by distilling the product of step (c); and
(e) blending the white oil obtained in step (d) with the active component, or coating the active component with the white oil obtained in step (d).

The relatively heavy Fischer-Tropsch derived feed as used in step (a) has at least 30 wt%, preferably at least 50 wt%, and more preferably at least 55 wt% of compounds having at least 30 carbon atoms. Furthermore the weight ratio of compounds having at least 60 or more carbon atoms and compounds having at least 30 carbon atoms of the Fischer-Tropsch derived feed is at least 0.2, preferably at least 0.4 and more preferably at least 0.55. The Fischer-Tropsch derived feed is preferably derived from a Fischer-Tropsch product which comprises a C₂₀+ fraction having an ASF-alpha value (Anderson-Schulz-Flory chain growth factor) of at least 0.925, preferably at least 0.935, more preferably at least 0.945, even more preferably at least 0.955.

The initial boiling point of the Fischer-Tropsch derived feed may range up to 400 °C, but is preferably below 200 °C. Preferably at least any compounds having 4 or less carbon atoms and any compounds having a boiling point in that range are separated from a Fischer-Tropsch synthesis product before the Fischer-Tropsch synthesis product is used as a Fischer-Tropsch derived feed in step (a). The Fischer-Tropsch derived feed as described in detail above will for the greater part comprise of a Fischer-Tropsch synthesis product, which has not been subjected to a hydroconversion step as defined according to the present invention. In addition to this Fischer-Tropsch product also other fractions may be part of the Fischer-Tropsch derived feed. Possible other fractions may suitably be any high boiling fraction obtained in step (b).

Such a Fischer-Tropsch derived feed is suitably obtained by a Fischer-Tropsch process, which yields a relatively heavy Fischer-Tropsch product. Not all Fischer-Tropsch processes yield such a heavy product. An example of a suitable Fischer-Tropsch process is described in WO-A-99/34917. This process may yield a Fischer-Tropsch product as described above.

The Fischer-Tropsch derived feed and the resulting waxy raffinate product will contain no or very little sulphur and nitrogen containing compounds. This is typical for a product derived from a Fischer-Tropsch reaction, which uses synthesis gas containing almost no impurities. Sulphur and nitrogen levels will generally be below the detection limits, which are currently 5 ppm for sulphur and 1 ppm for nitrogen.

The hydrocracking/hydroisomerisation reaction of step (a) is preferably performed in the presence of hydrogen and a catalyst, which catalyst can be chosen from those known to one skilled in the art as being suitable for this reaction. Catalysts for use in step (a) typically comprise an acidic functionality and a hydrogenation/dehydrogenation functionality. Preferred acidic functionalities are refractory metal oxide carriers. Suitable carrier materials include silica, alumina, silica-alumina, zirconia, titania and mixtures thereof. Preferred carrier materials for inclusion in the catalyst for use in the process of this invention are silica, alumina and silica-alumina. A particularly preferred catalyst comprises platinum supported on a silica-alumina carrier. If desired, the acidity of the catalyst carrier may be enhanced by applying a halogen moiety, in particular fluorine, or a phosphorous moiety to the carrier. Examples of suitable hydrocracking/hydroisomerisation processes and suitable catalysts are described in WO-A-00/14179, EP-A-532 118 and the earlier referred to EP-A-776 959.

Preferred hydrogenation/dehydrogenation functionalities are Group VIII metals, such as nickel, cobalt, iron, palladium and platinum. Preferred are the noble metal Group VIII members, palladium and more preferred platinum. The catalyst may comprise the more preferred noble metal hydrogenation/dehydrogenation active component in an amount of from 0.005 to 5 parts by weight, preferably from 0.02 to 2 parts by weight, per 100 parts by weight of carrier material. A particularly preferred catalyst for use in the hydroconversion stage comprises platinum in an amount in the range of from 0.05 to 2 parts by weight, more preferably from 0.1 to 1 parts by weight, per 100 parts by weight of carrier material. The catalyst may also comprise a binder to enhance the strength of the catalyst. The binder can be non-acidic. Examples are clays and other binders known to one skilled in the art.

In step (a) the feed is contacted with hydrogen in the presence of the catalyst at elevated temperature and pressure. The temperatures typically will be in the range of from 175 to 380 °C, preferably higher than 250 °C and more preferably from 300 to 370 °C. The pressure will typically be in the range of from 10 to 250 bar and preferably between 20 and 80 bar. Hydrogen may be supplied at a gas hourly space velocity of from 100 to 10000 Nl/l/hr, preferably from 500 to 5000 Nl/l/hr. The hydrocarbon feed may be provided at a weight hourly space velocity of from 0.1 to 5 kg/l/hr, preferably higher than 0.5 kg/l/hr and more preferably lower than 2 kg/l/hr. The ratio of hydrogen to hydrocarbon feed may range from 100 to 5000 Nl/kg and is preferably from 250 to 2500 Nl/kg.

The conversion in step (a) as defined as the weight percentage of the feed boiling above 370 °C which reacts per pass to a fraction boiling below 370 °C, is at least 20 wt%, preferably at least 25 wt%, but preferably not more than 80 wt%, more preferably not more than 65 wt%. The feed as used above in the definition is the total hydrocarbon feed fed to step (a), thus also including any optional recycle of the higher boiling fraction as obtained in step (b).

In step (b) the product of step (a) is preferably separated into one or more distillate fractions, a white oil precursor fraction having preferably a T10wt% boiling point of between 300 and 450 °C. A heavy fraction may be separated from the product of step (a) to adjust the resultant viscosity of the medicinal or technical white oil. If no heavy fraction is removed the kinematic viscosity at 100 °C of the white oil may be well above 15 mm²/sec. By adjusting the amount and cut point at which the said heavy fraction is separated from the effluent of step (a) medicinal white oils or technical white oils can be obtained having a kinematic viscosity at 100 °C ranging from above 2 mm²/s to less than 7 mm²/s, and preferably from 2.5 mm²/s to 5.5 mm²/s.

If a heavy fraction is separated then the T90wt% boiling point of the white oil precursor fraction will preferably be between 350 and 550 °C. The separation is preferably performed by means of a first distillation at about atmospheric conditions, preferably at a pressure of between 1.2-2 bar, wherein the gas oil product and lower boiling fractions, such as naphtha and kerosine fractions, are separated from the higher boiling fraction of the product of step (a). If a high boiling fraction is removed from the product of step (a) as described above, then this higher boiling fraction, of which suitably at least 95 wt% boils above 370 °C, is further separated in a vacuum distillation step wherein a vacuum gas oil fraction, the white oil precursor fraction and the optional higher boiling fraction are obtained. The vacuum distillation is suitably performed at a pressure of between 0.001 and 0.1 bara.

In step (c) the white oil precursor fraction obtained in step (b) is subjected to a pour point reducing treatment. With a pour point reducing treatment is understood every process wherein the pour point of the base oil is reduced by more than 10 °C, preferably more than 20 °C, more preferably more than 25 °C. The pour point reducing treatment is preferably performed by means of a so-called catalytic dewaxing process.

The catalytic dewaxing process can be performed by any process wherein in the presence of a catalyst and hydrogen the pour point of the white oil precursor fraction is reduced as specified above. Suitable dewaxing catalysts are heterogeneous catalysts comprising a molecular sieve and optionally in combination with a metal having a hydrogenation function, such as the Group VIII metals. Molecular sieves, and more suitably intermediate pore size zeolites, have shown a good catalytic ability to reduce the pour point of the white oil precursor fraction under catalytic dewaxing conditions. Preferably the intermediate pore size zeolites have a pore diameter of between 0.35 and 0.8 nm. Suitable intermediate pore size zeolites are mordenite, ZSM-5, ZSM-12, ZSM-22, ZSM-23, SSZ-32, ZSM-35 and ZSM-48. Another preferred group of molecular sieves are the silica-aluminaphosphate (SAPO) materials of which SAPO-11 is most preferred as for example described in US-A-4 859 311. ZSM-5 may optionally be used in its HZSM-5 form in the absence of any Group VIII metal. The other molecular sieves are preferably used in combination with an added Group VIII metal. Suitable Group VIII metals are nickel, cobalt, platinum and palladium. Examples of possible combinations are Ni/ZSM-5, Pt/ZSM-23, Pd/ZSM-23, Pt/ZSM-48 and Pt/SAPO-11. Further details and examples of suitable molecular sieves and dewaxing conditions are for example described in WO-A-97/18278, US-A-5 053 373, US-A-5 252 527 and US-A-4 574 043.

The dewaxing catalyst suitably also comprises a binder. The binder can be a synthetic or naturally occurring (inorganic) substance, for example clay, silica and/or metal oxides. Natural occurring clays are for example of the montmorillonite and kaolin families. The binder is preferably a porous binder material, for example a refractory oxide of which examples are: alumina, silica-alumina, silica-magnesia, silica-zirconia, silica-thoria, silica-beryllia, silica-titania as well as ternary compositions for example silica-alumina-thoria, silica-alumina-zirconia, silica-alumina-magnesia and silica-magnesia-zirconia. More preferably a low acidity refractory oxide binder material which is essentially free of alumina is used. Examples of these binder materials are silica, zirconia, titanium dioxide, germanium dioxide, boria and mixtures of two or more of these of which examples are listed above. The most preferred binder is silica.

A preferred class of dewaxing catalysts comprise intermediate zeolite crystallites as described above and a low acidity refractory oxide binder material which is essentially free of alumina as described above, wherein the surface of the aluminosilicate zeolite crystallites has been modified by subjecting the aluminosilicate zeolite crystallites to a surface dealumination treatment. A preferred dealumination treatment is by contacting an extrudate of the binder and the zeolite with an aqueous solution of a fluorosilicate salt as described in for example US-A-5 157 191 or WO-A-00/29511. Examples of suitable dewaxing catalysts as described above are silica bound and dealuminated Pt/ZSM-5, silica bound and dealuminated Pt/ZSM-23, silica bound and dealuminated Pt/ZSM-12, silica bound and dealuminated Pt/ZSM-22, as for example described in WO-A-00/29511 and EP-B-832 171.

Catalytic dewaxing conditions are known in the art and typically involve operating temperatures in the range of from 200 to 500 °C, suitably from 250 to 400 °C, hydrogen pressures in the range of from 10 to 200 bar, preferably from 40 to 70 bar, weight hourly space velocities (WHSV) in the range of from 0.1 to 10 kg of oil per litre of catalyst per hour (kg/l/hr), suitably from 0.2 to 5 kg/l/hr, more suitably from 0.5 to 3 kg/l/hr and hydrogen to oil ratios in the range of from 100 to 2,000 litres of hydrogen per litre of oil. By varying the temperature between 315 and 375 °C at between 40-70 bars, in the catalytic dewaxing step it is possible to prepare base oils having different pour point specifications varying from suitably -10 to -60 °C.

In step (d) the dewaxed effluent of step (c), optionally after flashing off some low boiling compounds, is separated into one or more low viscosity base oil products and the white oil.

In order to improve the colour properties of this white oil fraction as obtained above a final finishing treatment may be performed. Examples of suitable finishing treatments are so-called sulfuric acid treating processes, hydrofinishing processes and adsorption processes. Sulfuric acid treating is for example described in General Textbook "Lubricant Base Oil and Wax Processing", Avilino Sequeira, Jr, Marcel Dekker Inc., New York, 1994, Chapter 6, pages 226-227.

Hydrofinishing is suitably carried out at a temperature between 180 and 380 °C, a total pressure of between 10 to 250 bar and preferably above 100 bar and more preferably between 120 and 250 bar. The WHSV (Weight hourly space velocity) ranges from 0.3 to 2 kg of oil per litre of catalyst per hour (kg/l.h).

The hydrogenation catalyst is suitably a supported catalyst comprising a dispersed Group VIII metal. Possible Group VIII metals are cobalt, nickel, palladium and platinum. Cobalt and nickel containing catalysts may also comprise a Group VIB metal, suitably molybdenum and tungsten. Suitable carrier or support materials are low acidity amorphous refractory oxides. Examples of suitable amorphous refractory oxides include inorganic oxides, such as alumina, silica, titania, zirconia, boria, silica-alumina, fluorided alumina, fluorided silica-alumina and mixtures of two or more of these.

Examples of suitable hydrogenation catalysts are nickel-molybdenum containing catalyst such as KF-847 and KF-8010 (AKZO Nobel) M-8-24 and M-8-25 (BASF), and C-424, DN-190, HDS-3 and HDS-4 (Criterion); nickel-tungsten containing catalysts such as NI-4342 and NI-4352 (Engelhard) and C-454 (Criterion); cobalt-molybdenum containing catalysts such as KF-330 (AKZO-Nobel), HDS-22 (Criterion) and HPC-601 (Engelhard). Preferably platinum containing and more preferably platinum and palladium containing catalysts are used. Preferred supports for these palladium and/or platinum containing catalysts are amorphous silica-alumina. Examples of suitable silica-alumina carriers are disclosed in WO-A-94/10263. A preferred catalyst comprises an alloy of palladium and platinum preferably supported on an amorphous silica-alumina carrier of which the commercially available catalyst C-624 of Criterion Catalyst Company (Houston, TX) is an example.

The white oil as obtained by the process as described above, including the optional hydrogenation step, may also be contacted with an adsorbent to further increase the colour properties. In this respect reference is made to WO 2004/000975. Examples of suitable heterogeneous adsorbents are active carbon, zeolites, for example natural faujasite, or synthetic materials such as ferrierite, ZSM-5, faujasite, mordenite, metal oxides such as silica powder, silica gel, aluminium oxyde and various clays, for example Attapulgus clay (hydrous magnesium-aluminium silicate), Porocel clay (hydrated aluminium oxide). A preferred adsorbent is activated carbon.

In general, activated carbon is a microcrystalline, nongraphitic form of carbon, which has been processed to develop internal porosity due to which it has a large surface area. Activated carbons which have been found particularly suitable, are those having a surface area (N₂, BET method) in the range from 500 to 1500 m²/g, preferably from 900 to 1400 m²/g, and a Hg pore volume in the range from 0.1 to 1.0 ml/g, preferably from 0.2 to 0.8 ml/g. With the expression "Hg pore volume" is meant the pore volume as determined by mercury porosimetry. Very good results have been obtained with activated carbons which additionally have a micropore size distribution of 0.2 to 2 nm with an average of 0.5 to 1 nm, a pore size distribution (Hg porosimetry) in the range from 1 to 10,000 nm, preferably from 1 to 5,000 nm, and a total pore volume as determined by nitrogen porosimetry in the range from 0.4 to 1.5 ml/g, preferably from 0.5 to 1.3 ml/g. Other preferred physical characteristics include an apparent bulk density of from 0.25 to 0.55 g/ml, a particle size of from 0.4 to 3.5 nm, preferably 0.5 to 1.5 nm, and a bulk crushing strength of at least 0.8 MPa, preferably at least 1.0 MPa. Examples of suitable commercially available activated carbons include Chemviron type, Chemviron F-400 (FILTRASORB 400), DARCO GCL 8*30 and DARCO GCL 12*40 (FILTRASORB and DARCO are trade marks).

The activated carbon used in the process according to the present invention is preferably dry activated carbon. This means that the water content of the activated carbon should be less than 2% by weight, preferably less than 1% by weight and more preferably less than 0.5% by weight, based on total weight of activated carbon. This usually means that the activated carbon has to be dried first before application in the process of the present invention. Drying can be either be performed ex situ or in situ via conventional drying procedures known in the art. Examples of suitable drying procedures are those wherein activated carbon is dried at a temperature in the range of from 100 to 500°C for 1 to 48 hours in a nitrogen atmosphere. In case of applying a fixed bed of activated carbon, in situ drying the activated carbon, i.e. drying after the activated carbon has been packed into a bed, is preferred.

The conditions (temperature, pressure, space velocity) under which the bottom product is contacted with the activated carbon may vary within broad ranges in order to still attain the desired white oil quality. Temperatures in the range of from 20 to 300 °C, preferably 30 to 200 °C, more preferably 40 to 150 °C, have been found to be suitable in this respect. The operating pressure of the process according to the present invention is not particularly critical and may be in the range of from 1 to 200 bar, preferably 1 to 100 bar, most preferably 1 to 20 bar. A suitable weight hourly space velocity has been found to be in the range of from 0.2 to 25 kg/l/hr, preferably from 0.5 to 10 kg/l/hr and more preferably from 1 to 5 kg/l/hr.

Blending or coating step (e) of the subject process may be performed by any suitable method. Step (e) is preferably performed by incorporating the white oil with the active component by mixing together the active component and the oil by a rolling, extruding, or milling operation such as by milling a mixture of the active component and the oil on compounding rolls until a homogeneous composition is obtained. In an alternative embodiment of the above process, the white oil is added to the active component. Additionally, the composition may comprise surface active agents and emulsifiers, if so required, as those generally applied. Suitable compound are for instance those disclosed in "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1967; and Winnacker-Küchler, "Chemische Technologie", Volume 7, C. Hanser Verlag Munich, 4th Edition 1986.

In a further aspect, the present invention relates to the use of a Fischer-Tropsch derived white oil as described above as carrier oil for fertilisers

## Claims

1. Composition comprising a Fischer-Tropsch derived white oil, wherein the Fischer-Tropsch derived white oil has a kinematic viscosity at 100 °C of in between more than 2 mm²/s and less than 7 mm²/s as determined according to ISO 3014, and a fertilizer as an active component.

2. Composition according to claim 1, wherein the Fischer-Tropsch derived white oil has a kinematic viscosity at 100 °C of more than 2.5 mm²/s.

3. Composition according to claim 1 or 2, wherein the Fischer-Tropsch derived white oil has a content of mineral hydrocarbons with carbon numbers less than 25 of not more than 5% (w/w) and a 5 wt% recovery boiling point of above 391 °C according to ASTM D 2887.

4. Composition according to claim 3, wherein the Fischer-Tropsch derived white oil has a content of mineral hydrocarbons with carbon numbers less than 25 of not more than 3% (w/w).

5. Composition according to one or more of the preceding claims, wherein the composition comprises from 0.1 to 80 wt% of the Fischer-Tropsch derived white oil.

6. Composition according to one or more of the preceding claims, wherein the Fischer-Tropsch derived white oil has a kinematic viscosity at 40 °C of less than 55, as determined according to ISO 3014.

7. Composition according to one or more of the preceding claims, wherein the Fischer-Tropsch derived white oil has a flash point below 270 °C, as determined according to ISO 2592.

8. Composition according to one or more of the preceding claims, wherein the Fischer-Tropsch derived white oil has a flash point of above 220°C, as determined according to ISO 2592.

9. Process to prepare a composition according to one or more of the preceding claims, comprising preparing a Fischer-Tropsch derived white oil by:
(a) hydrocracking/hydroisomerisating a Fischer-Tropsch derived feed, wherein weight ratio of compounds having at least 60 or more carbon atoms and compounds having at least 30 carbon atoms in the Fischer-Tropsch derived feed is at least 0.2 and wherein at least 30 wt% of compounds in the Fischer-Tropsch derived feed have at least 30 carbon atoms;
(b) separating the product of step (a) into one or more lower boiling distillate fraction(s) and a higher boiling white oil precursor fraction;
(c) performing a pour point reducing step to the white oil precursor fraction obtained in step (b); and
(d) isolating the white oil by distilling the product of step (c), and
(e) blending the white oil obtained in step (d) with the active component, or coating the active component with the white oil obtained in step (d).

10. Use of a Fischer-Tropsch derived white oil as described in the composition according to one or more of the preceding claims 1-8 as a carrier oil for a fertilizer as an active component.

## Patentansprüche

1. Zusammensetzung, umfassend ein aus Fischer-Tropsch stammendes Weißöl, wobei das aus Fischer-Tropsch stammende Weißöl eine kinematische Viskosität bei 100 °C von mehr als 2 mm²/s und weniger als 7 mm²/s, bestimmt gemäß ISO 3014, besitzt und ein Düngemittel als wirksame Komponente.

2. Zusammensetzung nach Anspruch 1, wobei das aus Fischer-Tropsch stammende Weißöl eine kinematische Viskosität bei 100 °C von mehr als 2,5 mm²/s aufweist.

3. Zusammensetzung nach Anspruch 1 oder 2, wobei das aus Fischer-Tropsch stammende Weißöl einen Gehalt an mineralischen Kohlenwasserstoffen mit Kohlenstoffzahlen von weniger als 25 von nicht mehr als 5% (Gewicht/Gewicht) aufweist und einen 5 Gew.-% Rückgewinnungssiedepunkt von über 391 °C nach ASTM D 2887 besitzt.

4. Zusammensetzung nach Anspruch 3, wobei das aus Fischer-Tropsch stammende Weißöl einen Gehalt an mineralischen Kohlenwasserstoffen mit Kohlenstoffzahlen von weniger als 25 von nicht mehr als 3% (Gewicht/Gewicht) aufweist.

5. Zusammensetzung nach einem oder mehreren der vorstehenden Ansprüche, wobei die Zusammensetzung 0,1 bis 80 Gew.-% des aus Fischer-Tropsch stammenden Weißöles umfasst.

6. Zusammensetzung nach einem oder mehreren der vorstehenden Ansprüche, wobei das aus Fischer-Tropsch stammende Weißöl eine kinematische Viskosität bei 40 °C von weniger als 55, bestimmt nach ISO 3014, aufweist.

7. Zusammensetzung nach einem oder mehreren der vorstehenden Ansprüche, wobei das aus Fischer-Tropsch stammende Weißöl einen Flammpunkt unter 270 °C, bestimmt nach ISO 2592, aufweist.

8. Zusammensetzung nach einem oder mehreren der vorstehenden Ansprüche, wobei das aus Fischer-Tropsch stammende Weißöl einen Flammpunkt über 220 °C, bestimmt nach ISO 2592, aufweist.

9. Verfahren zur Herstellung einer Zusammensetzung nach einem oder mehreren der vorstehenden Ansprüche, umfassend das Herstellen eines aus Fischer-Tropsch stammenden Weißöles durch:
(a) Hydrocracken/Hydroisomerisieren eines aus Fischer-Tropsch stammenden Einsatzmaterials, wobei das Gewichtsverhältnis an Verbindungen mit mindestens 60 oder mehr Kohlenstoffatomen zu Verbindungen mit mindestens 30 Kohlenstoffatomen in dem aus Fischer-Tropsch stammenden Einsatzmaterial mindestens 0,2 beträgt und wobei mindestens 30 Gew.-% der Verbindungen in dem aus Fischer-Tropsch stammenden Einsatzmaterial mindestens 30 Kohlenstoffatome aufweisen;
(b) Auftrennen des Produktes aus Schritt (a) in eine oder mehrere niedrig siedende Destillatfraktion(en) und in eine höher siedende Weißölvorläuferfraktion;
(c) Durchführen eines Schrittes zur Verringerung des Pourpoints an der im Schritt (b) erhaltenen Weißölvorläuferfraktion; und
(d) Isolieren des Weißöls durch Destillieren des Produktes aus Schritt (c), und
(e) Mischen des im Schritt (d) erhaltenen Weißöls mit der wirksamen Komponente, oder Beschichten der wirksamen Komponente mit dem im Schritt (d) erhaltenen Weißöl.

10. Verwendung eines aus Fischer-Tropsch stammenden Weißöls wie beschrieben in der Zusammensetzung nach einem oder mehreren der vorstehenden Ansprüche 1-8 als Trägeröl für ein Düngemittel als wirksame Komponente.

## Revendications

1. Composition comprenant une huile blanche dérivée d'un procédé de Fischer-Tropsch, dans laquelle l'huile blanche dérivée du procédé de Fischer-Tropsch a une viscosité cinématique à 100 °C comprise entre plus de 2 mm²/s et moins de 7 mm²/s, telle que déterminée selon la norme ISO 3014, et un fertilisant en tant que composant actif.

2. Composition selon la revendication 1, dans laquelle l'huile blanche délivrée du procédé de Fischer-Tropsch a une viscosité cinématique à 100 °C de plus de 2,5 mm²/s.

3. Composition selon la revendication 1 ou 2, dans laquelle l'huile blanche dérivée du procédé de Fischer-Tropsch a une teneur en hydrocarbures minéraux présentant un nombre de carbones inférieur à 25 ne dépassant pas 5% (en poids) et une récupération de 5% en poids à un point d'ébullition au-dessus de 391 °C conformément à la norme ASTM D 2887.

4. Composition selon la revendication 3, dans laquelle l'huile blanche délivrée du procédé de Fischer-Tropsch a une teneur en hydrocarbures minéraux présentant un nombre de carbones inférieur à 25 ne dépassant pas 3% (en poids).

5. Composition selon une ou plusieurs des revendications précédentes, dans laquelle la composition comprend de 0,1 à 80 % en poids de l'huile blanche délivrée du procédé de Fischer-Tropsch.

6. Composition selon une ou plusieurs des revendications précédentes, dans laquelle l'huile blanche délivrée du procédé de Fischer-Tropsch a une viscosité cinématique à 40 °C de moins de 55, telle que déterminée selon la norme ISO 3014.

7. Composition selon une ou plusieurs des revendications précédentes, dans laquelle l'huile blanche délivrée du procédé de Fischer-Tropsch a un point d'éclair supérieur à 270°C, tel que déterminé selon la norme ISO 2592.

8. Composition selon une ou plusieurs des revendications précédentes, dans laquelle l'huile blanche délivrée du procédé de Fischer-Tropsch a un point d'éclair supérieur à 220°C, tel que déterminé selon la norme ISO 2592.

9. Procédé de fabrication d'une composition selon une ou plusieurs des revendications précédentes, comprenant une préparation d'une huile blanche délivrée d'un procédé de Fischer-Tropsch par :
(a) hydrocraquage/hydroisomérisation d'une alimentation délivrée d'un procédé de Fischer-Tropsch, où la proportion en poids des composés comprenant au moins 60 ou plus d'atomes de carbone et des composés comprenant au moins 30 atomes de carbone dans l'alimentation délivrée du procédé de Fischer-Tropsch est d'au moins 0,2 et où au moins 30 % en poids des composés dans la l'alimentation délivrée du procédé de Fischer-Tropsch comprennent au moins 30 atomes de carbone ;
(b) séparation du produit de l'étape (a) en une ou plusieurs fraction(s) de distillation à une température d'ébullition inférieure et une fraction précurseur d'huile blanche à une température d'ébullition supérieure ;
(c) réalisation d'une étape de réduction du point d'écoulement à la fraction précurseur d'huile blanche obtenue à l'étape (b) ; et
(d) isolation de l'huile blanche en distillant le produit de l'étape (c), et
(e) mélange de l'huile blanche obtenue à l'étape (d) avec le composant actif, ou revêtement du composant actif avec l'huile blanche obtenue à l'étape (d).

10. Utilisation d'une huile blanche délivrée d'un procédé de Fischer-Tropsch telle que décrite dans la composition selon une ou plusieurs des revendications 1 à 8 précédentes comme une huile de support pour un fertilisant en tant que composant actif.
